# EUROPÄISCHE PATENTANMELDUNG

(11) **EP 4 760 241 A1**
(43) Veröffentlichungstag der Anmeldung: **17.06.2026**
(21) Anmeldenummer: 25223242.6
(22) Anmeldetag: 15.12.2025
(51) Int. Cl.: G01N 21/88

(54) **OPTISCHE PRÜFVORRICHTUNG SOWIE ANALYSEVERFAHREN**

(30) Priorität: 16.12.2024 DE 102024138051
(71) Anmelder: Baumer Inspection GmbH, 78467 Konstanz (DE)
(72) Erfinder: Diehl, Hans-Peter, 78464 Konstanz (DE); Villing, Wolfgang, 78467 Konstanz (DE)
(74) Vertreter: Strauss, Steffen

(57) **Zusammenfassung**

Die vorliegende Erfindung betrifft eine optische Prüfvorrichtung sowie ein Analyseverfahren zum Analysieren eines in einem Erfassungsbereich vor einem Hintergrund anordenbaren Prüflings, umfassend den Hintergrund mit einer hintergrundseitigen Lichtquelle, die für eine Ausgestaltung des Hintergrunds so ausgebildet ist, dass Licht einer hintergrundseitigen Spektralverteilung bei einer veränderbaren Strahlungsleistung zum Ausleuchten des Hintergrunds erzeugbar ist, eine auflichtseitige Lichtquelle, die für eine Auflichtbeleuchtung des Prüflings so ausgebildet ist, dass Licht einer auflichtseitigen Spektralverteilung auf den im Erfassungsbereich anordenbaren Prüfling aussendbar ist, wobei sich die hintergrundseitige Spektralverteilung von der auflichtseitigen Spektralverteilung unterscheidet, eine monochrome Kamera, die zum Abbilden des Erfassungsbereichs so ausgebildet ist, dass Licht gemäß seiner Spektralverteilung durch einen spektralen Empfindlichkeitswert und somit als ein spektraler Grauwert in einem Abbild ortsgenau erfassbar ist. Erfindungsgemäß ist vorgesehen, dass die Prüfvorrichtung Steuermittel umfasst, die zum Zusammenwirken mit der hintergrundseitigen Lichtquelle so ausgebildet sind, dass die Strahlungsleistung des Lichts der hintergrundseitigen Lichtquelle gemäß einem Sollwert veränderbar ist, um in dem Abbild im Bereich des Hintergrunds die Ausprägung des Grauwerts zu beeinflussen.

## Beschreibung

Die vorliegende Erfindung betrifft eine optische Prüfvorrichtung nach Anspruch 1. Ferner betrifft die vorliegende Erfindung ein Analyseverfahren nach Anspruch 10.

Aus dem Stand der Technik sind optische Prüfvorrichtungen zum Analysieren eines in einem Erfassungsbereich anordenbaren Prüflings hinlänglich bekannt.

Die vorbekannten optischen Prüfvorrichtungen umfassen eine auflichtseitige Lichtquelle, um den vor einem Hintergrund positionierbaren Prüfling auflichtseitig und/oder von einer Vorderseite zu beleuchten.

Ferner umfasst die optische Prüfvorrichtung eine hintergrundseitige Lichtquelle zum Ausleuchten eines Hintergrunds, der entlang einer Blickrichtung einer Kamera den Erfassungsbereich endseitig begrenzt.

Zudem ist es bekannt, den Erfassungsbereich mit einer monochromen Kamera zu überwachen, um Licht in Abhängigkeit seiner Spektralverteilung durch Grauwerte in einem Abbild zu erfassen und Störstellen im Prüfling beispielsweise in Form von Materialverfärbungen in einer Laminatdiele oder in Form von Fremdkörpern innerhalb eines Schüttgutstroms automatisiert zu erkennen.

Hierzu werden die Spektralbereiche der Auflichtbeleuchtung in Abhängigkeit vordefinierter Farbkanäle, insbesondere gemäß der Spektralverteilung von rot, grün und blau, variiert, um unterschiedliche Reflexionseigenschaften zwischen dem Prüfling und einer Störstelle bei unterschiedlichen Spektralbereichen zum Erkennen der Störstellen zu nutzen.

Ferner ist es auch bekannt, dass die Spektralverteilung der Hintergrundbeleuchtung an die Spektralverteilung der Auflichtbeleuchtung angepasst wird, um den Kontrast zwischen dem Prüfling und dem Hintergrund zu verringern und/oder die GUT-Klasse auszublenden, wodurch der Rechenaufwand zum Erkennen von Störstellen, die sich von der GUT-Klasse unterscheiden und somit im Abbild durch abweichende Grauwerte hervortreten, reduziert werden kann.

In Bezug auf Bauform und Materialkosten ist es bisher von Nachteil, dass sowohl die hintergrundseitige als auch die auflichtseitige Lichtquelle mehrfarbig ausgebildet sein müssen. Zudem wirkt sich bereits eine geringe Abweichung im Farbton zwischen der auflichtseitigen und der hintergrundseitigen Lichtquelle negativ auf das Analyseergebnis aus, da Störstellen nur mit hohem Rechenaufwand erkannt werden. Jedoch ist gerade bei Echtzeitanwendungen, etwa dem Erkennen von Fremdkörpern in einem Schüttgutvolumenstrom, die Rechenzeit beschränkt, weshalb es Bedarf an rechenzeitoptimierten Lösungen gibt.

Aufgabe der vorliegenden Erfindung ist es, die aus dem Stand der Technik bekannten Nachteile zu überwinden. Insbesondere ist es die Aufgabe der vorliegenden Erfindung eine optische Prüfvorrichtung zum Analysieren eines Erfassungsbereichs anzugeben, die zum einen durch die Einsparung von Komponenten kostengünstig sowie kompakt aufbaubar ist und zum anderen robust gegenüber Alterungserscheinungen und/oder wartungsarm ist. Ferner ist es insbesondere die Aufgabe, ein entsprechende Analyseverfahren für einen Prüfling anzugeben.

Die Aufgabe wird durch eine erfindungsgemäße optische Prüfvorrichtung gemäß dem Anspruch 1 gelöst. Ferner wird die Aufgabe auch durch ein erfindungsgemäßes Verfahren gemäß Anspruch 10 gelöst.

Die erfindungsgemäße optische Prüfvorrichtung ist zum Analysieren eines in einem Erfassungsbereich vor einem Hintergrund aufnehmbaren Prüflings ausgebildet.

Die erfindungsgemäße optische Prüfvorrichtung umfasst einen Hintergrund mit einer hintergrundseitigen Lichtquelle, die für eine Ausgestaltung des Hintergrunds ausgebildet ist, derart, dass Licht mit einer hintergrundseitigen Spektralverteilung bei veränderbarer und/oder einstellbarer Strahlungsleistung zum Ausleuchten des Hintergrunds erzeugt werden kann.

Ferner umfasst die erfindungsgemäße optische Prüfvorrichtung eine auflichtseitige Lichtquelle, die für eine Auflichtbeleuchtung des Prüflings so ausgebildet ist, dass Licht mit einer auflichtseitigen Spektralverteilung auf den im Erfassungsbereich anordenbaren Prüfling aussendbar ist.

Im Rahmen der vorliegenden Erfindung ist es zudem vorgesehen, dass sich die hintergrundseitige Spektralverteilung von der auflichtseitigen Spektralverteilung in zumindest einem inhomogenen Prüfzustand unterscheidet. Anders ausgedrückt, die auflichtseitige Lichtquelle umfasst wenigstens einen inhomogenen Prüfzustand, wobei die auflichtseitige Lichtquelle in dem wenigstens einen inhomogenen Prüfzustand Licht erzeugt mit einer Spektralverteilung, die sich von der Spektralverteilung des Lichts, das mit der hintergrundseitigen Lichtquelle erzeugt wird, unterscheidet.

Weiterhin umfasst die erfindungsgemäße optische Prüfvorrichtung eine monochrome Kamera, die zum Abbilden des Erfassungsbereich in einem Prüfzustand ausgebildet ist, derart, dass Licht gemäß seiner Spektralverteilung durch einen spektralen Empfindlichkeitswert und somit als ein spektraler Grauwert in einem Abbild orts- und/oder positionsgenau erfassbar ist.

Konkret in Bezug auf das Licht der erfindungsgemäßen auflichtseitigen Lichtquelle bedeutet dies, dass das Licht der auflichtseitigen Spektralverteilung bei einem auflichtseitigen Empfindlichkeitswert erfassbar und in dem Abbild als ein auflichtseitiger Grauwert darstellbar ist. Das Licht der hintergrundseitigen Spektralverteilung wird aufgrund der spektralen Abweichung zur auflichtseitigen Lichtquelle dagegen bei einem hintergrundseitigen Empfindlichkeitswert erfasst.

Im Rahmen der vorliegenden Erfindung wird in einem erfindungsgemäßen Prüfzustand ein Abbild mittels der monochromen Kamera erzeugt, wobei Licht sowohl von der auflichtseitigen Lichtquelle als auch von der hintergrundseitigen Lichtquelle erzeugt und ausgesendet wird.

In Abhängigkeit der Spektralverteilung der hintergrundseitigen und auflichtseitigen Lichtquelle wird ferner in der vorliegenden Erfindung zwischen einem erfindungsgemäßen inhomogenen Prüfzustand und einem homogenen Prüfzustand unterschieden.

Im inhomogenen Prüfzustand unterscheidet sich die Spektralverteilung der auflichtseitigen Lichtquelle von der Spektralverteilung der hintergrundseitigen Lichtquelle, die zeitgleich und während dem Abbilden des Erfassungsbereichs mittels der monochromen Kamera Licht aussenden.

Im homogenen Prüfzustand entspricht die auflichtseitige Spektralverteilung der hintergrundseitigen Spektralverteilung. Anders ausgedrückt, während des homogenen Prüfzustand wird ein Abbild erzeugt, wobei die hintergrundseitige Lichtquelle und die auflichtseitige Lichtquelle Licht mit einer übereinstimmenden Spektralverteilung aussenden. Bei dem Licht mit übereinstimmender Spektralverteilung handelt es sich insbesondere um rotes oder grünes oder blaues Licht.

Es wird darauf hingewiesen, dass sich im inhomogenen Prüfzustand der hintergrundseitige Empfindlichkeitswert vom auflichtseitigen Empfindlichkeitswert aufgrund der spektralen Abweichung beider Lichtquellen unterscheidet. Ferner wird darauf hingewiesen, dass es sich beim auflichtseitigen und beim hintergrundseitigen Empfindlichkeitswert in Abhängigkeit der jeweiligen Spektralverteilung, insbesondere des jeweiligen Längenwellenbereichs, auch um einen Mittelwert und/oder eine Vielzahl von Einzelwerten handeln kann.

Zudem umfasst die erfindungsgemäße optische Prüfvorrichtung Steuermittel, die zum Zusammenwirken mit der hintergrundseitigen Lichtquelle ausgebildet sind, derart, dass die Strahlungsleistung des Lichts der hintergrundseitigen Lichtquelle gemäß einem Sollwert veränderbar ist. Im Rahmen der vorliegenden Erfindung wurde nämlich erkannt, dass die Ausprägung des Grauwerts im Bereich des Hintergrunds durch das Verändern des Sollwerts und somit durch das Variieren der Strahlungsleistung der hintergrundseitigen Lichtquelle gezielt beeinflusst werden kann. Es ist somit möglich, dass das Licht der hintergrundseitigen Lichtquelle einen Grauwert erzeugt, der gemäß der Spektralverteilung der monochromen Kamera eigentlich nicht zur hintergrundseitigen Spektralverteilung passt. Erfindungsgemäß vorteilhaft wird es somit möglich, dass durch die hintergrundseitige Lichtquelle jeglicher Grauwert von Licht mit einer x-beliebigen Spektralverteilung erzeugbar ist.

Die Strahlungsleistung ist im Rahmen der vorliegenden Erfindung unabhängig von einem Wellenlängenbereich. Kommt es somit zu einer Veränderung der Strahlungsleistung, wirkt sich dies nicht auf die Spektralverteilung des ausgesendeten Lichts aus. Die Strahlungsleistung kann somit insbesondere auch als Helligkeit bezeichnet werden. Anders ausgedrückt, die Strahlungsleistung ist insbesondere durch die wellenlängenunabhängige Lichtmenge definiert, die von der hintergrundseitigen Lichtquelle pro Zeiteinheit erzeugt und/oder ausgesendet wird.

Die monochrome Kamera erzeugt in wenigstens einem Prüfzustand, insbesondere während wenigstens einen inhomogenen Prüfzustand und/oder während einem homogenen Prüfzustand, Abbilder vom Erfassungsbereich. Insbesondere erzeugt die monochrome Kamera ein Abbild von dem Prüfling, der innerhalb des Erfassungsbereichs vor dem Hintergrund in einem Erfassungszustand angeordnet ist.

Die monochrome Kamera umfasst insbesondere einen Bildsensor, um die Lichtstrahlen des Erfassungsbereichs orts- und/oder positionsgenau zu erfassen und das erfindungsgemäße Abbild mit den Helligkeitsinformationen des Erfassungsbereichs zu erzeugen. Das orts- und/oder positionsgenaue Erfassen des Erfassungsbereichs bedeutet bei der vorliegenden Erfindung, dass jedem Grauwert und/oder jedem Bereich des Abbilds eine Position und/oder ein Bereich des Erfassungsbereichs zuordenbar ist. Somit lässt sich aus der Position einer erkannten Störstelle im Abbild auch die Position der Störstelle im Erfassungsbereich zum Zeitpunkt der Erfassung zuordnen.

Das erzeugbare Abbild umfasst insbesondere mehrere Grauwerte, wobei die Grauwerte insbesondere über einen zeilenförmigen oder matrixförmigen Bildsensor insbesondere pixelbasiert erfasst werden. Das Abbild umfasst insbesondere mehrere Abbild-Teilbereiche, wobei jeder Teilbereich des Abbilds ein Bereich des Erfassungsbereichs abbildet.

Zusammenfassend erfasst jeder Teilbereich des Abbilds einen bestimmten Bereich des Erfassungsbereichs während einer vordefinierten Zeitspanne und erzeugt in Abhängigkeit der Spektralverteilung des innerhalb dieser Zeitspanne erfassten Lichts sowie der Strahlungsleistung dieses Lichts einen Grauwert.

Anders ausgedrückt, das Abbild umfasst Informationen über die Farb- und/oder Reflexionseigenschaften des Erfassungsbereichs - und somit des vor dem Hintergrund anordenbaren Prüflings - zum Erfassungszeitpunkt in Form von unterschiedlich stark ausgeprägten Grauwerten, wobei der Grad des Grauwerts insbesondere von der Spektralverteilung des Lichts, insbesondere der hintergrundseitigen Lichtquelle und der auflichtseitigen Lichtquelle, abhängt.

Zwischen der Strahlleistung der Lichtquelle und des Grads des Grauwerts liegt eine positive Korrelation vor, so dass mit steigender Strahlleistung auch der Grad des Grauwerts zunimmt.

Der Zusammenhang zwischen der Spektralverteilung des Lichts und dem Grad des Grauwerts ist definiert von den Eigenschaften der eingesetzten monochromen Kamera. Dieser Zusammenhang ist somit insbesondere abhängig vom Halbleitermaterial und/oder der konstruktiven Ausgestaltung der monochromen Kamera und/oder optischen Eigenschaften eines Objektivs, das von der monochromen Kamera zum Abbilden des Erfassungsbereichs auf einen Bildsensor, umfasst ist.

Der Hintergrund umfasst eine räumliche Erstreckung und ist so dimensioniert, dass er den Erfassungsbereich vollständig ausfüllt. Anders ausgedrückt, die monochrome Kamera erfasst einen Erfassungsbereich, der entlang einer Blickrichtung der Kamera ausgerichtet ist und endseitig durch den Hintergrund begrenzt ist.

Die hintergrundseitige Lichtquelle ist zum gleichmäßigen Beleuchten des Hintergrunds eingerichtet. Die hintergrundseitige Lichtquelle umfasst zumindest eine räumlich gebündelte Lichtquelle. Bevorzugt ist die hintergrundseitige Lichtquelle aus zumindest zwei räumlich getrennten Lichtquellen ausgebildet. Besonders bevorzugt umfasst die Lichtquelle mehrere Leuchtdioden, um Licht mit einer breiten Spektralverteilung, insbesondere weißes Licht, oder Licht mit einer schmalen Spektralverteilung, insbesondere farbiges Licht, zu erzeugen.

Das Licht mit der auflichtseitigen Spektralverteilung, das von der auflichtseitigen Lichtquelle erzeugbar und/oder aussendbar ist, wird insbesondere in Folge von Reflexion und/oder Streuung am aufnehmbaren Prüfling von der monochromen Kamera erfasst. Die auflichtseitige Lichtquelle ist in einem Bereich angeordnet, der so gewählt ist, dass der Prüfling von einer Vorderseite beleuchtet wird, wobei diese Vorderseite auch von der monochromen Kamera erfasst wird und/oder hinsichtlich der Blickrichtung der Kamera dieser zugewandt ist.

Zudem wird darauf hingewiesen, dass die auflichtseitige Lichtquelle im Rahmen der vorliegenden Erfindung stets Licht mit konstanter und/oder unveränderbarer Strahlleistung aussendet. Die Ausprägung des Grauwerts des Lichts der auflichtseitigen Lichtquelle wird somit neben der Integrations- und/oder Belichtungszeit der Kamera lediglich von der auflichtseitigen Spektralverteilung bestimmt.

Das Licht mit der hintergrundseitigen Spektralverteilung, das von der hintergrundseitigen Lichtquelle erzeugbar und/oder aussendbar ist und den Hintergrund ausleuchtet, wird in Bereichen des Erfassungsbereichs erfasst, die zum Erfassungszeitpunkt nicht vom Prüfling verdeckt sind.

Die erfindungsgemäßen Steuermittel, umfassen bevorzugt eine Speichereinheit und/oder Kommunikationsmittel, um einen vordefinierten Sollwert in Abhängigkeit von wenigstens einer Bedingung und/oder Stellgröße zu erhalten. Bei diesem Sollwert handelt es sich insbesondere um einen Referenzwert, um die Strahlungsleistung der hintergrundseitigen Lichtquelle gemäß diesem vordefinierten Referenzwert einzustellen. Bevorzugt wird der Sollwert so vorgegeben, dass sich im Abbild im Bereich des Hintergrunds der Grauwert, der durch Lichtstrahlen der hintergrundseitigen Lichtquelle erzeugt wird, ändert und/oder gezielt beeinflusst werden kann.

Die Erfassung der Lichtstrahlen, insbesondere mittels der einzelnen Pixel, erfolgt gemäß einer, insbesondere hardwarebasierten und somit von den Eigenschaften des Bildsensors der monochromen Kamera abhängigen, Spektralverteilung. Spektralverteilung bedeutet hierbei, dass Licht in Abhängigkeit seiner Spektralverteilung bei einem bestimmten Empfindlichkeitswert erfasst werden kann.

Anders ausgedrückt, das Licht, insbesondere ein Lichtstrahl, wird in Abhängigkeit seiner Spektralverteilung und/oder des Wellenlängenbereichs des Lichts, insbesondere der Wellenlänge des Lichtstrahls, bei unterschiedlichen Empfindlichkeitswerten oder unterschiedlichen Effizienzen erfasst. Der Grauwert des Abbilds entsteht durch eine zeitliche Integration des Lichts, insbesondere der einzelnen Lichtstrahlen, wobei diese Integrations- und/oder Belichtungszeit im Rahmen der vorliegenden Erfindung nicht dynamisch geändert wird, sondern vielmehr einmalig und/oder manuell dauerhaft eingestellt wird.

Insbesondere bei Licht mit einem breiten Spektralbereich handelt es sich bei dem spektralen Empfindlichkeitswert um einen Mittelwert, der sich aus mehreren Empfindlichkeitswerten zusammensetzt.

Im Rahmen der vorliegenden Erfindung wurde nun erkannt, dass die von einer monochromen Kamera erzeugten Grauwerte auch unabhängig von der Spektralverteilung der erfassten Lichtstrahlen beeinflusst werden können. Erfindungsgemäß vorteilhaft ermöglicht dies, dass im Abbild die Grauwerte von farbigem Licht erzeugbar sind, ohne dass die Lichtquelle zum Aussenden von farbigem Licht ausgebildet und/oder eingerichtet ist. Erfindungsgemäß vorteilhaft lässt sich somit durch eine Lichtquelle mit statischer Spektralverteilung im Abbild der monochromen Kamera Grauwerte erzeugen, die von einer Lichtquelle mit einer abweichenden Spektralverteilung abstammen, um somit den Hintergrund entsprechend auszugestalten.

Vorteilhafte Weiterbildungen der Erfindung sind in den Unteransprüchen beschrieben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Eine bevorzugte Weiterbildung der erfindungsgemäßen Prüfvorrichtung sieht vor, dass die Steuermittel derart ausgebildet sind, dass der Sollwert in Abhängigkeit eines Farbanteils des Prüflings gewählt wird, um im Abbild im Bereich des Hintergrunds einen vom Farbanteil des Prüflings abhängigen Grauwert zu erzeugen. Vorteilhaft kann somit erzielt werden, dass die Lichtstrahlen, die durch die hintergrundseitige Lichtquelle und somit beim hintergrundseitigen Empfindlichkeitswert erfasst werden, einen Grauwert in Übereinstimmung des Farbanteils des Prüflings erzeugen. Dies führt dazu, dass Störstellen, die von diesem Farbanteil abweichen, im Abbild rechenzeitoptimiert erfasst werden können, was insbesondere für Echtzeitanwendungen vorteilhaft ist.

Alternativ ist es bei einer bevorzugten Weiterbildung vorgesehen, dass die Steuermittel so ausgebildet sind, dass der Sollwert in Abhängigkeit des auflichtseitigen Grauwerts oder eines Mittelwerts des auflichtseitigen Grauwerts gewählt wird oder diesem entspricht, um im Abbild im Bereich des Hintergrunds einen von der auflichtseitigen Spektralverteilung abhängigen Grauwert zu erzeugen. Vorteilhaft kann somit erreicht werden, dass sich der Hintergrund und der Prüfling angleichen und somit Störstellen im Prüfling vereinfacht erfassen lassen. Der Mittelwert basiert insbesondere auf einer zeitlichen Integration, die insbesondere in einem Kalibrierzustand, einmalig und/oder gemäße Nutzervorgabe und/oder manuell gesteuert durchgeführt wird.

Eine bevorzugte Weiterbildung sieht vor, dass die Steuermittel mit der monochromen Kamera in Wirkverbindung stehen und derart ausgebildet sind, dass in einem Kalibrierzustand der Sollwert in Abhängigkeit des von der Kamera unmittelbar erfassten auflichtseitigen Grauwerts in Echtzeit gewählt wird, um einen geschlossenen Regelkreis für das dynamische Nachbilden des Grauwerts im Bereich des Hintergrunds in Abhängigkeit der auflichtseitigen Spektralverteilung zu erzeugen.

Im Kalibrierzustand wird bevorzugt Licht lediglich von der auflichtseitigen Lichtquelle ausgesendet, während die hintergrundseitige Lichtquelle deaktiviert ist. Vorteilhaft lässt sich somit im Abbild der mit der GUT-Klasse korrespondierende Grauwert bestimmen. Ferner ist es auch vorgesehen, dass der Kalibrierzustand manuell aktivierbar ist, um den mit der auflichtseitigen Spektralverteilung korrespondierenden Grauwert zu bestimmen und den entsprechenden Sollwert zu erzeugen. Der so erzeugte Sollwert wird dann insbesondere in Speichermitteln abgelegt, um zu einem späteren Zeitpunkt im Abbild den Grauwert im Bereich des Hintergrunds in Abhängigkeit der auflichtseitigen Spektralverteilung gesteuert zu erzeugen.

Weiterbildend ist die auflichtseitige Lichtquelle so ausgebildet, dass die auflichtseitige Spektralverteilung verändert und/oder angepasst werden kann, um Licht einer ersten oder wenigstens einer zweiten Spektralverteilung auszusenden.

Durch diese bevorzugte Ausgestaltung der auflichtseitigen Lichtquelle kann Licht mit unterschiedlichen Spektralanteilen von der auflichtseitigen Lichtquelle ausgesendet werden. Dies umfasst zudem, dass weißes oder farbiges, insbesondere rotes und/oder grünes und/oder blaues Licht aussendbar ist.

Weiterbildend ist es in diesem Zusammenhang vorgesehen, dass die erste Spektralverteilung und die wenigstens zweite Spektralverteilung spektralseitig jeweils ein Maximum aufweisen, welche zueinander benachbart und/oder in Bezug auf eine Wellenlänge beabstandet sind, um im jeweiligen Prüfzustand Licht unterschiedlicher Farbe zu erzeugen. Somit kann, insbesondere in einem ersten Prüfzustand, rotes Licht und/oder, insbesondere in einem zweiten Prüfzustand, grünes Licht und/oder, insbesondere in einem dritten Prüfzustand, blaues Licht erzeugt werden, wobei diese Reihenfolge beliebig variieren kann.

Ferner kann im jeweiligen Prüfzustand eine beliebige Spektralverteilung eines beliebigen Farbtons genutzt werden. Vorteilhaft kann somit ein erstes und wenigstens ein zweites Abbild, insbesondere ein erstes, ein zweites und ein drittes Abbild, mit Grauwerten entsprechend den Kanälen einer RGB-Kamera erzeugt werden.

Ferner ist es weiterbildend besonders bevorzugt, wenn die auflichtseitige Lichtquelle einen Multispektralen-Beleuchtungsmodus umfasst, wobei in diesem Multispektralen-Beleuchtungsmodus die auflichtseitige Lichtquelle Licht mit mehr als 3 benachbarten Spektralverteilungen umfasst, um somit mehr als 1 einzelnes Abbild zu erzeugen

Ferner ist es weiterbildend besonders bevorzugt, wenn die auflichtseitige Lichtquelle einen Hyperspektralen-Beleuchtungsmodus umfasst, wobei im Hyperspektralen-Beleuchtungsmodus die auflichtseitige Lichtquelle Licht mit mehr als 8, insbesondere 40, benachbarten Spektralverteilungen umfasst. Vorteilhaft lässt sich wiederum für jede Spektralverteilung ein Abbild mit Grauwerten des im Erfassungsbereichs anordenbaren Prüflings erzeugen.

Gemäß einer bevorzugten Weiterbildung umfasst die Prüfvorrichtung Analysemittel, die mit den Steuermitteln und der auflichtseitigen Lichtquelle in Wirkverbindung stehen.

Diese Analysemittel sind insbesondere dazu ausgebildet, dass in einem ersten Prüfzustand die auflichtseitige Lichtquelle Licht der ersten Spektralverteilung aussendet und die Steuermittel den Sollwert für die Strahlungsleistung in Abhängigkeit des auflichtseitigen Grauwerts des Lichts der ersten Spektralverteilung vorgeben, um in einem ersten Abbild im Bereich des Hintergrunds einen von der ersten Spektralverteilung abhängigen Grauwert zu erzeugen.

Weiterhin sind diese Analysemittel in diesem Zusammenhang insbesondere auch dazu ausgebildet, dass in wenigstens einem zweiten Prüfzustand die auflichtseitige Lichtquelle Licht der wenigstens zweiten Spektralverteilung aussendet und die Steuermittel den Sollwert für die Strahlungsleistung in Abhängigkeit des auflichtseitigen Grauwerts des Lichts der wenigstens zweiten Spektralverteilung vorgeben, um im wenigstens zweiten Abbild im Bereich des Hintergrunds einen von der wenigstens zweiten Spektralverteilung abhängigen Grauwert zu erzeugen.

Zusammenfassend wird im Rahmen dieser Ausgestaltung der erfindungsgemäße Vorteil der optischen Prüfvorrichtung besonders gut sichtbar, da sich durch das erfindungsgemäße Anpassen der Strahlungsleistung des hintergrundseitigen Lichts mittels der hintergrundseitigen Lichtquelle in Abhängigkeit der auflichtseitigen Spektralverteilung die Grauwerte im Abbild im Bereich des Hintergrunds trotz gleichbleibender hintergrundseitiger Spektralverteilung verändern lassen. Für sämtliche Prüfzustände, in denen die auflichtseitige Beleuchtung jeweils eine individuelle Spektralverteilung umfasst, werden trotz der hintergrundseitigen Beleuchtung mit gleichbleibender hintergrundseitiger Spektralverteilung im Abbild im Bereich des Hintergrunds Grauwerte erzeugt, die mit der individuellen Spektralverteilung der auflichtseitigen Beleuchtung im jeweiligen Prüfzustand korrespondieren.

Weiterbildend ist es zudem bevorzugt vorgesehen, dass die erfindungsgemäße optische Prüfvorrichtung neben dem inhomogenen Prüfzustand zusätzlich einen homogenen Prüfzustand umfasst, wobei in dem homogenen Prüfzustand die erste Spektralverteilung der hintergrundseitigen Lichtquelle und die auflichtseitige Spektralverteilung der auflichtseitigen Lichtquelle übereinstimmen.

Im homogenen Prüfzustand kommt es somit zu einer auflichtseitigen und hintergrundseitigen Beleuchtung mit identischer Spektralverteilung, um mittels der monochromen Kamera ein entsprechendes Abbild vom vor dem Hintergrund anordenbaren Prüfling zu erzeugen.

Vorteilhaft wird es somit ermöglicht, dass die hintergrundseitige Lichtquelle beispielsweise Licht gemäß dem Spektrum von Blau in einem ersten und wenigstens einen zweiten Prüfzustand aussendet, während die auflichtseitige Lichtquelle so ausgebildet ist, dass Licht gemäß den Spektren von Rot in dem ersten Prüfzustand und Blau in dem wenigstens zweiten Prüfzustand, insbesondere in einem zweiten Prüfzustand, und/oder Grün in dem wenigstens zweiten, insbesondere einem dritten Prüfzustand, ausgesendet werden.

Ferner wird in diesem Zusammenhang darauf hingewiesen, dass der erste Prüfzustand auch noch dem wenigstens einen zweiten Prüfzustand aktiviert werden kann.

Beim ersten Prüfzustand kann es sich um einen inhomogenen oder einen homogenen Prüfzustand handeln. Ferner handelt es sich im wenigstens zweiten Prüfzustand um einen inhomogenen oder homogenen Prüfzustand. Die Prüfvorrichtung und/oder das Prüfverfahren umfasst jedoch insgesamt nur einen homogenen Prüfzustand.

Bei einer bevorzugten Weiterbildung der optischen Prüfvorrichtung ist die hintergrundseitige Lichtquelle so ausgebildet, dass in einem Pulsdauerbetriebmodus zwischen einerseits einem Licht aussenden Betrieb während einer Einschaltdauer und andererseits einem kein Licht aussenden Betrieb während einer Ausschaltdauer periodisch umgeschaltet wird, um die Strahlungsleistung einzustellen.

Alternativ ist es weiterbildend vorgesehen, dass die hintergrundseitige Lichtquelle so ausgebildet ist, dass in einem Stromregelungsmodus die Strombeaufschlagung der Lichtquelle veränderbar ist, um die Strahlungsleistung einzustellen.

Bei einer bevorzugten Weiterbildung ist der Hintergrund transluzent, insbesondere als Streuscheibe; ausgebildet und erstreckt sich in Bezug auf die Blickrichtung der Kamera in einem Bereich zwischen dem aufnehmbaren Prüfling und der hintergrundseitigen Lichtquelle. Der Hintergrund ist in diesem Zusammenhang so ausgebildet, dass das Licht der hintergrundseitigen Lichtquelle in Transmission gestreut wird. Anders ausgedrückt, das Licht der hintergrundseitigen Lichtquelle trifft auf einer Hintergrund-Hinterseite auf den Hintergrund und durchdringt diesen zumindest zum Teil. Die Hintergrund-Hinterseite erstreckt sich auf einer Seite des Hintergrunds, die vom Prüfling abgewandt ist.

Bei einer hierzu alternativen Ausgestaltung des Hintergrunds ist dieser reflektierend, bevorzugt als ein Flächenelement, besonders bevorzugt als ein farbiges Blechelement, ausgebildet. Der Hintergrund erstreckt sich in einem Bereich, der in Bezug auf die Blickrichtung der Kamera hinter dem aufnehmbaren Prüfling und der hintergrundseitigen Lichtquelle liegt. Das Licht der hintergrundseitigen Lichtquelle wird somit reflektiert. Anders ausgedrückt, der Hintergrund umfasst eine Hintergrund-Vorderseite, die dem Prüfling zugewandt ist. Die Hintergrund-Vorderseite ist somit gegenüberliegend zur Hintergrund-Hinterseite ausgebildet. Ferner begrenzt die Hintergrund-Vorderseite den Erfassungsbereich entlang der Blickrichtung der Kamera.

Weiterhin wird im Rahmen der vorliegenden Erfindung auch Schutz beansprucht für ein Verfahren zum Analysieren eines Prüflings, der in einem Erfassungsbereich einer monochromen Kamera vor einem Hintergrund anordenbar ist, wobei insbesondere eine erfindungsgemäße optische Prüfvorrichtung eingesetzt wird. Das erfindungsgemäße Verfahren umfasst insbesondere die folgenden Verfahrensschritte.

**In** einem Verfahrensschritt erfolgt das Anordnen des Prüflings im Erfassungsbereich der Kamera vor dem Hintergrund.

**In** einem weiteren Verfahrensschritt erfolgt das Aussenden von Licht einer auflichtseitigen Spektralverteilung auf den Prüfling mittels einer auflichtseitigen Lichtquelle während einer ersten Zeitdauer;

**In** einem weiteren Verfahrensschritt erfolgt das Ausleuchten des Hintergrunds mit Licht einer hintergrundseitigen Spektralverteilung mit einer Strahlungsleistung mittels einer hintergrundseitigen Lichtquelle während einer zweiten Zeitdauer, wobei sich die Zeitspanne der ersten Zeitdauer und der zweiten Zeitdauer unterscheiden können, jedoch zumindest während einer dritten Zeitdauer zeitgleich sind;

**In** einem weiteren Verfahrensschritt erfolgt das ortsgenaue Erfassen des Lichts im Erfassungsbereich gemäß seiner Spektralverteilung während der dritten Zeitdauer und das Abbilden des erfassten Lichts zu Grauwerten mittels einer zum Abbilden des Erfassungsbereichs positionierten monochromen Kamera;

**In** einem weiteren Verfahrensschritt erfolgt das Beeinflussen der Strahlungsleistung des Lichts der hintergrundseitigen Lichtquelle gemäß einer Sollwertvorgabe mittels der Steuermittel, die zum Zusammenwirken mit der hintergrundseitigen Lichtquelle ausgebildet sind, um im Abbild im Bereich des Hintergrunds die Ausprägung des Grauwerts zu beeinflussen.

Ferner ist es weiterbildend bevorzugt, wenn das erfindungsgemäße Verfahren als weiteren Verfahrensschritt das Wählen des Sollwerts in Abhängigkeit eines Farbanteils des Prüflings mittels der Steuermittel umfasst, um im Abbild im Bereich des Hintergrunds einen vom Farbanteil des Prüflings abhängigen Grauwert zu erzeugen.

Alternativ ist es weiterbildend bevorzugt, wenn das erfindungsgemäße Verfahren als weiteren Verfahrensschritt das Wählen des Sollwerts in Abhängigkeit des auflichtseitigen Grauwerts mittels der Steuermittel umfasst, um im Abbild im Bereich des Hintergrunds einen von der auflichtseitigen Spektralverteilung abhängigen Grauwert zu erzeugen.

Ferner ist es weiterbildend vorgesehen, dass das erfindungsgemäße Verfahren auch einen homogenen Prüfzustand umfasst.

Bevorzugt ist es, wenn das erfindungsgemäße Verfahren einen inhomogen Prüfzustand und einen homogenen Prüfzustand umfasst.

Besonders bevorzugt ist es, wenn das erfindungsgemäße Verfahren einen ersten inhomogen Prüfzustand, einen zweiten inhomogenen Prüfzustand und einen homogenen Prüfzustand umfasst.

Der Reihenfolge der einzelnen Prüfzustände kann im Rahmen der vorliegenden Erfindung beliebig variieren. Der homogene Beleuchtungszustand kann somit an erster oder zweiter oder dritter oder einer weiteren Stelle durchgeführt werden.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des erfindungsgemäßen Systems durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen benannt.

Es zeigen:
- Fig. 1a-c:: Unterschiedliche schematische Darstellungen zur Verdeutlichung einer erfindungsgemäßen optischen Prüfvorrichtung gemäß einer ersten beispielhaften Ausführungsform;
- Fig. 2:: eine schematische Darstellung einer erfindungsgemäßen optischen Prüfvorrichtung gemäß einer zweiten beispielhaften Ausführungsform in drei zeitlich aufeinander folgenden Zuständen;
- Fig. 3:: eine schematische Darstellung der Spektralverteilungen einer bevorzugten auflichtseitigen Lichtquelle;
- Fig. 4:: eine schematische Darstellung einer erfindungsgemäßen optischen Prüfvorrichtung gemäß einer dritten beispielhaften Ausführungsform;
- Fig. 5:: eine schematische Darstellung einer erfindungsgemäßen optischen Prüfvorrichtung gemäß einer vierten beispielhaften Ausführungsform,
- Fig. 6:: eine schematische Darstellung zur Veranschaulichung eines erfindungsgemäßen Analyseverfahrens sowie
- Fig. 7:: eine schematische Darstellung zur Veranschaulichung einer erfindungsgemäßen optischen Prüfvorrichtung gemäß einer fünften beispielhaften Ausführungsform.

Im Folgenden sind Aufbau und Funktion einer erfindungsgemäßen optischen Prüfvorrichtung 1 sowie eines erfindungsgemäßen Verfahrens mit Bezug auf die Figuren beispielhaft beschrieben. Obwohl einige Aspekte der Erfindung lediglich im Rahmen der Vorrichtung 1 beschrieben werden, ist es selbstverständlich möglich, dass diese Aspekte auch eine Beschreibung des entsprechenden Verfahrens darstellen, wobei z.B. ein Block, ein Modul, eine Einheit, eine Einrichtung oder eine Eigenschaft der Vorrichtung 1 einem Verfahrensschritt oder einer Funktion eines Verfahrensschritts entspricht. Analog dazu stellen Aspekte, die im Rahmen eines Verfahrensschritts beschrieben werden, auch entsprechend eine Beschreibung eines Blocks, eines Moduls, einer Einheit, einer Einrichtung oder einer Eigenschaft der Vorrichtung dar.

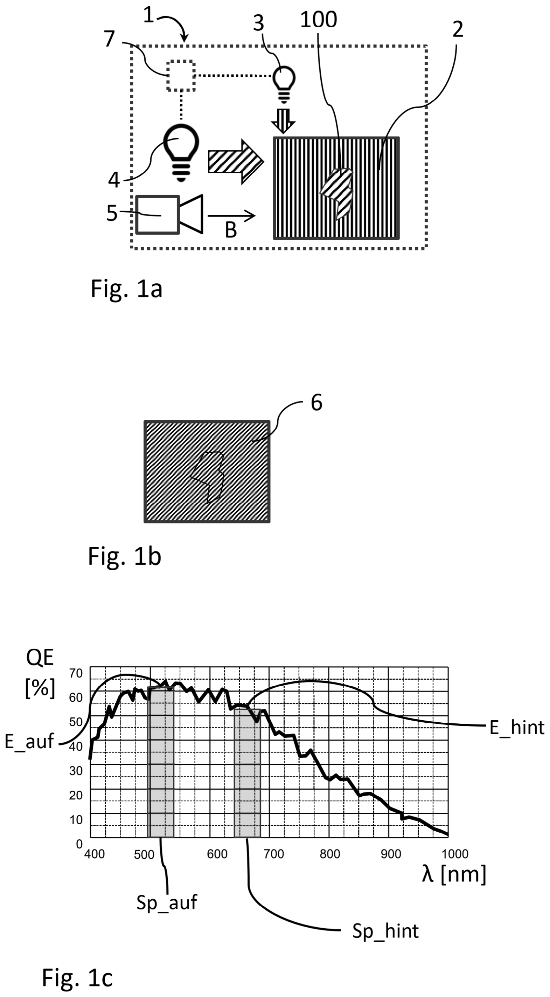

In **Fig. 1a** ist eine, schematische Darstellung einer beispielhaften Ausführungsform der erfindungsgemäßen optischen Prüfvorrichtung 1 gemäß einer ersten bevorzugten Ausführungsvariante gezeigt.

Die optische Prüfvorrichtung 1 ist zum Analysieren eines in einem Erfassungsbereich vor einem Hintergrund 2 anordenbaren Prüflings 100 ausgebildet und umfasst den Hintergrund 2 mit einer hintergrundseitigen Lichtquelle 3. Die erfindungsgemäße hintergrundseitige Lichtquelle 3 ist zum Ausleuchten des Hintergrunds 2 derart ausgebildet, dass Licht einer hintergrundseitigen Spektralverteilung zum Ausleuchten des Hintergrunds 2 ausgesendet werden kann. Ferner ist die hintergrundseitige Lichtquelle 3 so ausgebildet, dass die Strahlungsleistung, insbesondere die Helligkeit, des Lichts der hintergrundseitigen Spektralverteilung verändert werden kann. Bei der Veränderung und/oder Anpassung der Strahlungsleistung der hintergrundseitigen Lichtquelle 3 kommt es im Rahmen der vorliegenden Erfindung nicht zu einer Veränderung und/oder Anpassung der hintergrundseitigen Spektralverteilung des ausgesendeten Lichts.

Zudem umfasst die erfindungsgemäße optische Prüfvorrichtung 1 eine auflichtseitige Lichtquelle 4 für eine auflichtseitige Beleuchtung des Prüflings 100, wobei der Prüfling 100 im Erfassungsbereich vor dem Hintergrund 2 anordenbar ist.

Die auflichtseitige Lichtquelle 4 ist so ausgebildet, dass in einem Betriebszustand Licht einer auflichtseitigen Spektralverteilung auf den Prüfling 100 ausgesendet wird. Es wird darauf hingewiesen, dass sich im Rahmen der vorliegenden Erfindung die hintergrundseitige Spektralverteilung von der auflichtseitigen Spektralverteilung in wenigstens einem inhomogenen Prüfzustand unterscheidet.

Weiterhin umfasst die erfindungsgemäße optische Prüfvorrichtung 1 eine monochrome Kamera 5, die den Erfassungsbereich erfasst und abbildet. Konkret ist die monochrome Kamera 5 zum Abbilden des Erfassungsbereichs so ausgebildet, dass Licht gemäß seiner Spektralverteilung und somit in Abhängigkeit wenigstens eines spektralen Empfindlichkeitswerts als ein spektraler Grauwert in einem Abbild 6 ortsgenau erfassbar ist.

Ortsgenau bedeutet in diesem Zusammenhang, dass jedem erfassten Grauwert ein Bereich des Erfassungsbereichs zugeordnet werden kann. Anders ausgedrückt, dass Abbild 6 umfasst mehrere Teilbereiche, wobei jedem Teilbereich des Abbilds 6 ein Bereich des Erfassungsbereichs zugeordnet werden kann. Stark schematisiert zeigt **Fig. 1b** ein solches Abbild 6.

Zudem umfasst die monochrome Kamera 5 eine Blickrichtung B, durch die der Erfassungsbereich der monochromen Kamera 5 definiert und/oder ausgerichtet ist. An einem der Kamera 5 in Bezug auf die Blickrichtung B gegenüberliegenden Ende wird der Erfassungsbereich der monochromen Kamera 5 durch den ausleuchtbaren Hintergrund 2 begrenzt, wobei der Prüfling 100 vor diesem Hintergrund 2 und somit zwischen der monochromen Kamera 5 und dem Hintergrund positionierbar ist

Die erfindungsgemäße monochrome Kamera 5 ist so ausgebildet, dass das Licht der auflichtseitigen Spektralverteilung Sp_auf bei einem auflichtseitigen Empfindlichkeitswert E_auf erfassbar und in dem Abbild als ein auflichtseitiger Grauwert abbildbar ist. Ferner ist die erfindungsgemäße monochrome Kamera 5 so ausgebildet, dass das Licht der hintergrundseitigen Spektralverteilung Sp_hint bei einem hintergrundseitigen Empfindlichkeitswert E_hint erfassbar ist, was stark schematisiert in der **Fig. 1c** dargestellt ist.

Die Fig. 1c zeigt eine typische Kennlinie einer beispielhaft herausgegriffenen monochromen Kamera. Die Kennlinie ordnet einem Spektralwert und/oder einer Wellenlänge λ auf der X-Achse einen Empfindlichkeit- und/oder Effizienzwert QE in Prozent auf der Y-Achse zu.

Aus der jeweiligen Kennlinie geht somit hervor, mit welcher Empfindlichkeit und/oder Effizienz Licht in Abhängigkeit seines Spektralwerts von der jeweiligen Kamera 5 erfasst wird.

Ferner geht aus dem Diagramm hervor, dass sich der auflichtseitige Empfindlichkeitswert und der hintergrundseitige Empfindlichkeitswert jeweils aus mehreren Einzelwerten zusammensetzt. Die Anzahl der Einzelwerte wird durch die Spektralverteilung des auflichtseitigen bzw. hintergrundseitigen Lichts bestimmt, was auch die Breite der grafisch hervorgehobenen Bereiche definiert. Die Auswahl der Einzelwerte wird durch die Spektralverteilung des auflichtseitigen bzw. hintergrundseitigen Lichts bestimmt, was die Lage der grafisch hervorgehobenen Bereiche definiert.

Aufgrund der Abweichung zwischen dem auflichtseitigen und dem hintergrundseitigen Empfindlichkeitswert wird jedoch verdeutlicht, dass Licht der auflichtseitigen und der hintergrundseitigen Lichtquelle bei identischer Strahlungsleistung und Beleuchtungszeit zu unterschiedlichen Grauwerten führt.

Zudem umfasst die erfindungsgemäße Prüfvorrichtung 1 Steuermittel 7, die zum Zusammenwirken mit der hintergrundseitigen Lichtquelle 3 so ausgebildet sind, dass die Strahlungsleistung des Lichts der hintergrundseitigen Lichtquelle 3 gemäß einem Sollwert veränderbar ist, um in dem Abbild 6 im Bereich des Hintergrunds 2 die Ausprägung des Grauwerts zu beeinflussen.

Die Anpassung der Strahlungsleistung erfolgt vorliegend in Abhängigkeit der auflichtseitigen Spektralverteilung. Konkret ist es nämlich erfindungsgemäß vorgesehen, dass die Strahlungsleistung in Abhängigkeit einer Abweichung zwischen dem auflichtseitigen und dem hintergrundseitigen Empfindlichkeitswert so gewählt wird, dass sich der auflichtseitige Grauwert und der hintergrundseitige Grauwert angleichen und/oder im Wesentlichen übereinstimmen.

Ferner wird darauf hingewiesen, dass das Anpassen der Helligkeit der hintergrundseitigen Lichtquelle 3 auf einer Veränderung der Strombeaufschlagung der Lichtquelle 3 beruht. Besonders bevorzugt wird die Lichtquelle 3 durch Leuchtdioden ausgebildet, wobei die Strahlungsleistung und/oder die Helligkeit der hintergrundseitigen Lichtquelle 3 durch das Einregeln des auf die Lichtquelle eingeprägten Stroms erfolgt.

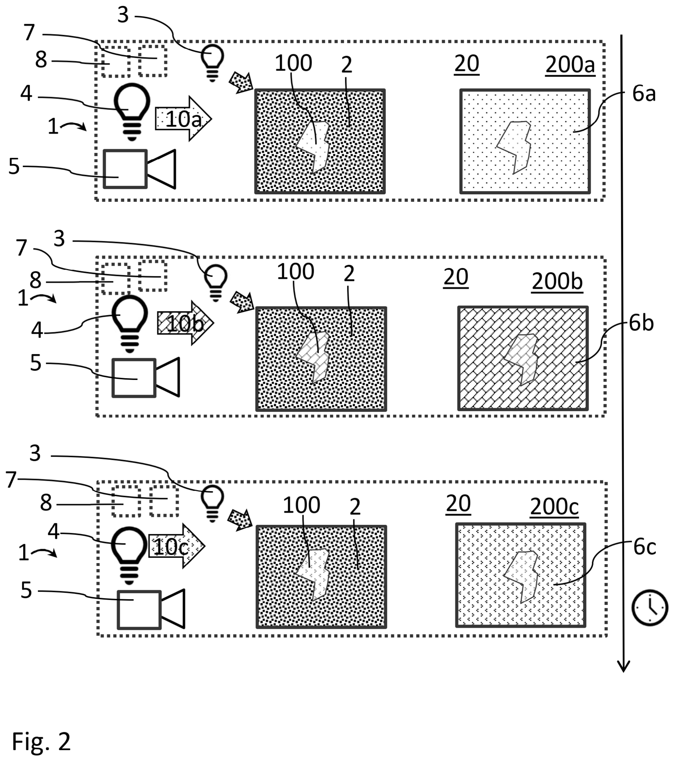

Die **Fig. 2** zeigt eine schematische Darstellung einer erfindungsgemäßen optischen Prüfvorrichtung 1 gemäß einer zweiten beispielhaften Ausführungsform zu insgesamt drei Prüfzuständen 200a-c, die zeitlich in beliebiger Reifenfolge aufeinander folgen können.

Um Wiederholungen zu vermeiden, werden im Folgenden lediglich die Unterschiede zur bereits aus den Figuren 1a-c bekannten optischen Prüfvorrichtung 1 beschrieben.

Zunächst ist die auflichtseitige Lichtquelle 4 bei der zweiten beispielhaften Ausführungsform so ausgebildet, dass die auflichtseitige Spektralverteilung verändert werden kann.

Die auflichtseitige Lichtquelle 4 ist somit eingerichtet, um Licht mit einer ersten Spektralverteilung in einem ersten Leuchtzustand 10a oder mit einer zweiten Spektralverteilung in einem zweiten Leuchtzustand 10b oder mit einer dritten Spektralverteilung in einem dritten Leuchtzustand 10c zu erzeugen und/oder auf den im Erfassungsbereich anordenbaren Prüfling 100 zeitversetzt bzw. während unterschiedlicher Prüfzustände auszusenden. Die erste Spektralverteilung unterscheidet sich von der zweiten sowie der dritten Spektralverteilung sowie umgekehrt.

Die hintergrundseitige Lichtquelle 3 sendet dagegen unabhängig vom ersten, zweiten oder dritten Leuchtzustand 10a-c der auflichtseitigen Lichtquelle 4 stets weißes Licht oder gleichfarbiges Licht aus, wobei die Strahlungsleistung des ausgesendeten Lichts so von den Steuermitteln 7 angepasst wird, dass in dem mittels der monochromen Kamera 5 erzeugbaren Abbild 6 der Prüfling 100 sowie der Hintergrund 2 gleich hell erscheinen.

Ferner umfasst die optische Prüfvorrichtung 1 gemäß der hier dargestellten zweiten Ausführungsvariante Analysemittel 8, die mit den Steuermitteln 7 und der auflichtseitigen Lichtquelle 4 zusammenwirken.

Die Analysemittel 8 sind so ausgebildet, dass in einem ersten Prüfzustand 200a die auflichtseitige Lichtquelle 4 Licht der ersten Spektralverteilung aussendet und/oder sich im ersten Leuchtzustand 10a befindet, wobei die Steuermittel 7 zeitgleich den Sollwert in Abhängigkeit des auflichtseitigen Grauwerts des Lichts der ersten Spektralverteilung vorgeben, um in einem ersten Abbild 6a im Bereich des Hintergrunds 2 einen von der ersten Spektralverteilung des auflichtseitigen Lichts abhängigen Grauwert zu erzeugen. Da sich die auflichtseitige Spektralverteilung von der hintergrundseitigen Spektralverteilung unterscheidet, handelt es sich bei diesem ersten Prüfzustand 200a um einen inhomogenen Prüfzustand 20.

Die Analysemittel 8 sind zudem dazu eingerichtet, dass in einem zweiten Prüfzustand 200b, der zeitlich versetzt zum ersten Prüfzustand 200a aktiv ist, die auflichtseitige Lichtquelle 4 Licht gemäß der zweiten Spektralverteilung aussendet und/oder sich im zweiten Leuchtzustand 10b befindet, wobei die Steuermittel 7 den Sollwert in Abhängigkeit des auflichtseitigen Grauwerts des Lichts der zweiten Spektralverteilung vorgeben, um im wenigstens zweiten Abbild 6b im Bereich des Hintergrunds 2 einen von der zweiten Spektralverteilung abhängigen Grauwert zu erzeugen. Auch im zweiten Prüfzustand 200b handelt es sich vorliegend um einen inhomogenen Prüfzustand 20, da sich die auflichtseitige Spektralverteilung von der hintergrundseitigen Spektralverteilung unterscheidet.

Ferner sind die Analysemittel 8 auch dazu eingerichtet, dass in einem dritten Prüfzustand 200c, der zeitlich versetzt zum ersten und zweiten Prüfzustand aktiv wird, die auflichtseitige Lichtquelle 4 Licht gemäß der dritten Spektralverteilung aussendet und/oder sich im dritten Leuchtzustand 10c befindet, wobei die Steuermittel 7 den Sollwert in Abhängigkeit des auflichtseitigen Grauwerts des Lichts der dritten Spektralverteilung vorgeben, um im dritten Abbild 6c im Bereich des Hintergrunds 2 einen von der dritten Spektralverteilung des Lichts der auflichtseitigen Lichtquelle 3 abhängigen Grauwert zu erzeugen.

Vorliegend ist es vorgesehen, dass im ersten Leuchtzustand 10a die erste Spektralverteilung so definiert ist, dass rotes Licht aussendbar ist und im zweiten Leuchtzustand 10b die zweite Spektralverteilung so gewählt ist, dass grünes Licht aussendbar ist und im dritten Leuchtzustand 10c die dritte Spektralverteilung so ausgelegt ist, dass blaues Licht aussendbar ist.

Durch die erfindungsgemäße Anpassung der Strahlungsleistung, insbesondere durch die Helligkeitsanpassung, der hintergrundseitigen Lichtquelle 3 wird erfindungsgemäß erzielt, dass trotz der Realisierung der hintergrundseitigen Lichtquelle 3 durch eine weiße oder eine einfarbige Lichtquelle eine Analyse entsprechend einer RGB-Kamera durchführbar ist.

Konkret bedeutet dies, dass im ersten Prüfzustand 200a eine auflichtseitige Beleuchtung mit einer mit Rot korrespondierenden auflichtseitigen Spektralverteilung erfolgt, wobei die Strahlungsleistung der hintergrundseitigen Lichtquelle, die eine breite, mit Weißlicht korrespondierende Spektralverteilung umfasst, so eingestellt wird, dass mit der hintergrundseitigen Lichtquelle Grauwerte erzeugbar sind, die den Grauwerten von rotem Licht entsprechen.

Ferner wird im zweiten Prüfzustand 200b eine auflichtseitige Beleuchtung mit einer mit Grün korrespondierenden auflichtseitigen Spektralverteilung erzeugt, wobei die Strahlungsleistung der hintergrundseitigen Lichtquelle, die die mit Weißlicht korrespondierende Spektralverteilung umfasst, so eingestellt wird, dass mit der hintergrundseitigen Lichtquelle Grauwerte erzeugbar sind, die den Grauwerten von grünem Licht entsprechen.

Und im dritten Prüfzustand 200c wird eine auflichtseitige Beleuchtung mit einer mit Blau korrespondierenden auflichtseitigen Spektralverteilung erzeugt, wobei die Strahlungsleistung der hintergrundseitigen Lichtquelle, die die mit Weißlicht korrespondierende Spektralverteilung umfasst, so eingestellt wird, dass mit der hintergrundseitigen Lichtquelle Grauwerte erzeugbar sind, die den Grauwerten von blauem Licht entsprechen.

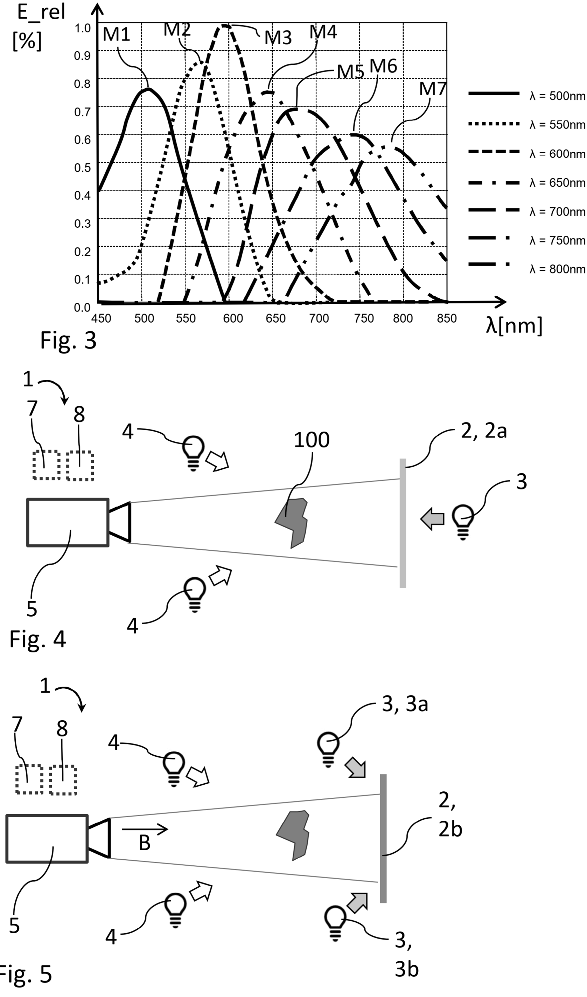

Die Fig. 3 bezieht sich auf eine Ausführungsform einer auflichtseitigen Lichtquelle 4, die zum Erzeugen und/oder Aussenden von Licht mit insgesamt sieben unterschiedlichen Spektralbereichen ausgebildet ist.

Konkret ist in dem dargestellten Diagramm auf der X-Achse die Wellenlänge λ in der Einheit "nm" des mittels der auflichtseitigen Lichtquelle 4 erzeugbaren Lichts und auf der Y-Achse der von der jeweiligen Spektralverteilung abhängige relative Empfindlichkeitswert E_rel in "%" und/oder "Prozent" dargestellt. Der relative Empfindlichkeitswert E_rel lässt sich insbesondere auch als relative spektrale Sensitivität bezeichnen.

Die sieben Kurven umfassen jeweils ein Maximum M1-7, wobei diese Maxima M1-7 spektralseitig zueinander benachbart sind und sich somit das jeweils erzeugte Licht farblich voneinander unterscheidet.

Gerade für solche Anwendungen zeigt sich der große Vorteil der vorliegenden Erfindung, da durch die erfindungsgemäße Anpassung der Strahlungsleistung trotz einer Hintergrundbeleuchtung mit statischer Spektralverteilung mittels der hintergrundseitigen Lichtquelle die Helligkeit des Hintergrunds an die Helligkeit des Prüflings angepasst werden kann. Somit ist es nicht erforderlich, die hintergrundseitige Lichtquelle entsprechend der auflichtseitigen Lichtquelle multispektral auszugestalten, was neben Materialkosten auch ein kompaktes Design der erfindungsgemäßen Prüfvorrichtung 1 ermöglicht.

Die **Fig. 4** zeigt einer erfindungsgemäße optische Prüfvorrichtung 1 gemäß einer dritten beispielhaften Ausführungsvariante.

Die optische Prüfvorrichtung 1 gemäß der dritten Ausführungsvariante umfasst neben der monochromen Kamera 5 auch eine auflichtseitige Lichtquelle 4 und eine hintergrundseitige Lichtquelle 3.

Die auflichtseitige Lichtquelle 4 ist so eingerichtet, dass die auflichtseitige Spektralverteilung des auf den Prüfling 100 und/oder den Hintergrund 2 aussendbaren Lichts veränderbar ist, derart, dass Licht mit einer ersten Spektralverteilung in einem ersten Leuchtzustand oder Licht mit wenigstens einer zweiten Spektralverteilung in wenigstens einem weiteren Leuchtzustand ausgesendet werden kann.

Zudem umfasst die optische Prüfvorrichtung 1 gemäß der dritten Ausführungsvariante auch die bereits bekannten Analysemittel 8, um den Prüfling in einem ersten Zustand mit Licht der ersten Spektralverteilung zu beleuchten, wobei die Steuermittel 7 für die hintergrundseitige Lichtquelle 3 einen Sollwert vorgeben, der so gewählt ist, dass im Abbild 6, das mittels der monochromen Kamera 5 erzeugbar ist, im Bereich des Hintergrunds 2 ein Grauwert in Abhängigkeit der ersten Spektralverteilung erzeugt wird. Vorteilhaft verschmelzt im Abbild der Hintergrund mit dem Prüfling, wodurch im Prüfling Störstellen, die beispielsweise durch Verfärbungen ausgebildet sind, einfacher erfasst werden können.

Ferner sind die Analysemittel 8 so ausgebildet, dass in wenigstens einem zweiten Zustand Licht des weiteren Leuchtzustands auf den Prüfling 100 aussendbar ist, wobei auch hier ein Sollwert von den Steuermitteln 7 zum Einstellen der hintergrundseitigen Lichtquelle gewählt wird, der dazu führt, dass im Abbild der Hintergrund und der Prüfling durch identische Grauwerte verschmelzen, und dadurch im Abbild weitgehend nur noch Störstellen sichtbar sind.

Die Farb- und Oberflächenbeschaffenheit der Störstellen wirkt sich auf die Reflexionseigenschaften des Lichts der Auflichtbeleuchtung aus, wobei die Reflexionseigenschaften zudem von der Spektralverteilung des Lichts der auflichtseitigen Beleuchtung abhängen.

Der Hintergrund 2 ist vorliegend durch eine Streuscheibe 2a mit transluzenten Eigenschaften ausgebildet. Die hintergrundseitige Lichtquelle ist vorliegend durch eine Lichtquelle realisiert, die den Hintergrund von einer Hinterseite bestrahlt, die vom aufnehmbaren Prüfling 100 abgewandt ist. Anders ausgedrückt, die Streuscheibe 2a befindet sich in einem Bereich zwischen dem aufnehmbaren Prüfling 100 und der hintergrundseitigen Lichtquelle 3, so dass das Licht der hintergrundseitigen Lichtquelle 3 in Transmission gestreut wird.

Die **Fig. 5** zeigt einer erfindungsgemäße optische Prüfvorrichtung 1 gemäß einer vierten beispielhaften Ausführungsvariante.

Die vierte Ausführungsvariante entspricht im Wesentlichen der dritten Ausführungsvariante, weshalb im Folgenden zur Vermeidung von Wiederholungen lediglich die Unterschiede beschrieben werden.

Die hintergrundseitige Lichtquelle 3 ist vorliegend durch zwei räumlich getrennte Lichtquellen 3a/b realisiert. In Bezug auf die Blickrichtung B der Kamera 5 befinden sich die beiden hintergrundseitigen Lichtquellen 3 quer gegenüber und außerhalb des Erfassungsbereichs, um den Hintergrund, der vorliegend durch ein farblich lackiertes Metallblech 2b ausgebildet ist, in Reflexion zu bestrahlen.

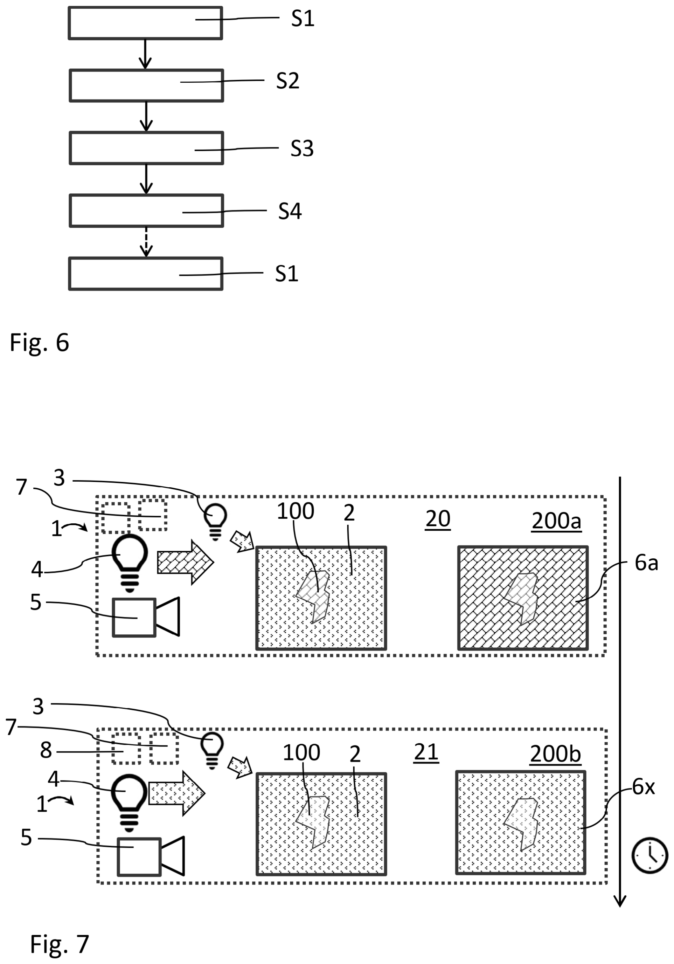

Die **Fig. 6** verdeutlicht das erfindungsgemäße Analyseverfahren, das insbesondere mittels einer erfindungsgemäßen optischen Prüfvorrichtung 1 umsetzbar ist.

Das erfindungsgemäße Verfahren weist die folgenden Verfahrensschritte auf:
In einem ersten Schritt S1 erfolgt das Anordnen des Prüflings 100 im Erfassungsbereich einer monochromen Kamera 5 vor einem Hintergrund 2, der mittels einer hintergrundseitigen Lichtquelle 3 mit Licht einer hintergrundseitigen Spektralverteilung beleuchtet werden kann.

In einem weiteren Schritt S2 erfolgt das Aussenden von Licht einer auflichtseitigen Spektralverteilung auf den Prüfling 100 mittels einer auflichtseitigen Lichtquelle 4, um die Vorderseite des Prüflings mit Licht der auflichtseitigen Spektralverteilung zu beleuchten, wobei die Vorderseite des Prüflings der monochromen Kamera 5 zugewandt ist und sich die hintergrundseitige Spektralverteilung und die auflichtseitige Spektralverteilung unterscheiden.

In einem weiteren Schritt S3, der zeitgleich zum Schritt S2 durchgeführt wird, erfolgt das Ausleuchten des Hintergrunds 2 mit Licht der hintergrundseitigen Spektralverteilung 3 mittels der hintergrundseitigen Lichtquelle 3, wobei die Strahlungsleistung, insbesondere die Helligkeit, der hintergrundseitigen Lichtquelle 3 gemäß einer Sollwertvorgabe mittels von der Prüfvorrichtung 1 umfassten Steuermitteln 7 beeinflusst wird, und die Steuermittel 7 zum Zusammenwirken mit der hintergrundseitigen Lichtquelle 3 ausgebildet sind, um im Abbild 6 im Bereich des Hintergrunds 2 die Ausprägung des Grauwerts zu beeinflussen.

In einem weiteren Schritt S4 erfolgt das ortsgenaue Erfassen des Lichts aus dem Erfassungsbereich mittels einer monochromen Kamera, wobei das Licht in Abhängigkeit einer Spektralverteilung in einem Abbild 6 durch Grauwerte dargestellt ist. Der weitere Verfahrensschritt S4 erfolgt somit insbesondere zeitgleich zu den Schritten S2 und S3.

Besonders bevorzugt ist es in diesem Zusammenhang, wenn der Sollwert von den Steuermitteln 7 in Abhängigkeit des auflichtseitigen Grauwerts gewählt wird, um im Abbild 6 im Bereich des Hintergrunds 2 einen von der auflichtseitigen Spektralverteilung abhängigen Grauwert zu erzeugen und somit den Hintergrund 2 mit dem Prüfling 100 zu verschmelzen, wodurch im Abbild Störstellen vereinfacht erkannt werden können.

Die **Fig. 7** zeigt eine schematische Darstellung einer erfindungsgemäßen optischen Prüfvorrichtung 1 gemäß einer fünften beispielhaften Ausführungsform in zeitlich aufeinanderfolgenden Prüfzuständen 200a/b, wobei die Reihenfolge variieren kann.

Zur Vermeidung von Wiederholungen, werden im Folgenden nur die wesentlichen Unterschiede zur bereits aus der **Fig. 2** bekannten optischen Prüfvorrichtung 1 gemäß der zweiten Ausführungsform beschrieben, da Aufbau und Funktion der optischen Prüfvorrichtung 1 gemäß der fünften Ausführungsform der zweiten Ausführungsform entsprechen und/oder nahezu identisch sind.

Die optische Prüfvorrichtung 1 gemäß der fünften Ausführungsform umfasst nicht nur inhomogene Prüfzustände 20, wie dies bei der Prüfvorrichtung gemäß der zweiten Ausführungsform der Fall ist, sondern auch einen zusätzlichen homogenen Prüfzustand 21.

Im homogenen Prüfzustand 21 sind die auflichtseitige und hintergrundseitige Lichtquelle so eingerichtet, dass die hintergrundseitige und die auflichtseitige Spektralverteilung übereinstimmen, um bei einer solchen homogenen Beleuchtung ein Abbild 6x mittels der monochromen Kamera 5 zu erzeugen.

Hinsichtlich des dargestellten Ausführungsbeispiels erfolgt nämlich im ersten Prüfzustand 200a die auflichtseitige Beleuchtung mittels der auflichtseitigen Lichtquelle 4 mit Licht einer ersten Spektralverteilung sowie zeitgleich die hintergrundseitige Beleuchtung mittels der hintergrundseitigen Lichtquelle 3 mit Licht der hintergrundseitigen Spektralverteilung, wobei sich die auflichtseitige Spektralverteilung von der hintergrundseitigen Spektralverteilung unterscheidet. Mittels der monochromen Kamera 5 wird zeitgleich zur auf- und hintergrundseitigen Beleuchtung ein Abbild 6a vom Erfassungsbereich erzeugt, das den vor dem Hintergrund 2 angeordneten Prüfling 100 zeigt. Da sich die auflichtseitige und die hintergrundseitige Beleuchtung unterscheiden, handelt es sich beim ersten Prüfzustand 200a um einen inhomogenen Prüfzustand 20.

Im zweiten Prüfzustand 200b erfolgt die auflichtseitige Beleuchtung mittels der auflichtseitigen Lichtquelle 4 mit Licht mit einer zweiten Spektralverteilung sowie die zeitgleich hintergrundseitige Beleuchtung mittels der hintergrundseitigen Lichtquelle 3 mit Licht der hintergrundseitigen Spektralverteilung, wobei die auflichtseitige Spektralverteilung nun so gewählt ist, dass sie der hintergrundseitigen Spektralverteilung entspricht. Die zweite Spektralverteilung der hintergrundseitigen Lichtquelle, die im zweiten Prüfzustand 200b ausgesendet wird, ist anders ausgedrückt so gewählt, dass sie der hintergrundseitigen Spektralverteilung entspricht.

Zeitgleich wird mittels der monochromen Kamera 5 ein zweites Abbild 6x erzeugt. Da sich die auflichtseitige und die hintergrundseitige Beleuchtung nicht unterscheiden, handelt es sich bei diesem zweiten Prüfzustand 200b um einen homogenen Prüfzustand 21.

Im Ergebnis ermöglicht die vorliegende Erfindung auf überraschend einfache Art die Bereitstellung einer optischen Prüfvorrichtung, um Störstellen in einem Prüfling, etwa ein Defekt auf einer Laminatdiele oder einen Fremdkörper in einem Schüttgutstrom, bei geringen Materialkosten vereinfacht zu erfassen.

## Patentansprüche

1. Optische Prüfvorrichtung (1) zum Analysieren eines in einem Erfassungsbereich vor einem Hintergrund (2) anordenbaren Prüflings (100), umfassend
- den Hintergrund (2) mit einer hintergrundseitigen Lichtquelle (3), die für eine Ausgestaltung des Hintergrunds (2) so ausgebildet ist, dass Licht einer hintergrundseitigen Spektralverteilung bei einer veränderbaren Strahlungsleistung zum Ausleuchten des Hintergrunds (2) erzeugbar ist;
- eine auflichtseitige Lichtquelle (4), die für eine Auflichtbeleuchtung des Prüflings (100) so ausgebildet ist, dass Licht einer auflichtseitigen Spektralverteilung auf den im Erfassungsbereich anordenbaren Prüfling (100) aussendbar ist, wobei sich die hintergrundseitige Spektralverteilung von der auflichtseitigen Spektralverteilung in wenigstens einem inhomogenen Prüfzustand unterscheidet;
- eine monochrome Kamera (5), die zum Abbilden des Erfassungsbereichs in einem Prüfzustand so ausgebildet ist, dass Licht gemäß seiner Spektralverteilung durch einen spektralen Empfindlichkeitswert und somit als ein spektraler Grauwert in einem Abbild (6) ortsgenau erfassbar ist, wobei das Licht der auflichtseitigen Spektralverteilung bei einem auflichtseitigen Empfindlichkeitswert (E_auf) erfassbar und in dem Abbild als ein auflichtseitiger Grauwert abbildbar und das Licht der hintergrundseitigen Spektralverteilung bei einem hintergrundseitigen Empfindlichkeitswert (E_hint) erfassbar ist, wobei
- die Prüfvorrichtung (1) Steuermittel (7) umfasst, die zum Zusammenwirken mit der hintergrundseitigen Lichtquelle (3) so ausgebildet sind, dass die Strahlungsleistung des Lichts der hintergrundseitigen Lichtquelle (3) gemäß einem Sollwert veränderbar ist, um in dem Abbild (6) im Bereich des Hintergrunds (2) die Ausprägung des Grauwerts zu beeinflussen.

2. Optische Prüfvorrichtung nach Anspruch 1,
**dadurch gekennzeichnet,**
**dass** die Steuermittel (7) so ausgebildet sind,
**dass** der Sollwert in Abhängigkeit eines Farbanteils des Prüflings (100) gewählt wird, um im Abbild (6) im Bereich des Hintergrunds (2) einen vom Farbanteil des Prüflings (100) abhängigen Grauwert zu erzeugen oder
**dass** der Sollwert in Abhängigkeit des auflichtseitigen Grauwerts oder einem Mittelwert des auflichtseitigen Grauwerts gewählt wird oder diesem entspricht, um im Abbild (6) im Bereich des Hintergrunds (2) einen von der auflichtseitigen Spektralverteilung abhängigen Grauwert zu erzeugen.

3. Optische Prüfvorrichtung nach Anspruch 2,
**dadurch gekennzeichnet,**
**dass** die Steuermittel (7) mit der monochromen Kamera (5) in Wirkverbindung stehen und so ausgebildet sind, dass in einem Kalibrierzustand der Sollwert in Abhängigkeit des von der Kamera (5) unmittelbar erfassten auflichtseitigen Grauwerts in Echtzeit gewählt wird, um einen geschlossenen Regelkreis für das dynamische Nachbilden des Grauwerts im Bereich des Hintergrunds (2) in Abhängigkeit der auflichtseitigen Spektralverteilung zu erzeugen.

4. Optische Prüfvorrichtung nach einem der vorgenannten Ansprüche,
**dadurch gekennzeichnet,**
**dass** die auflichtseitige Lichtquelle (4) so ausgebildet ist, dass die auflichtseitige Spektralverteilung veränderbar ist, derart, dass die auflichtseitige Lichtquelle Licht einer ersten oder wenigstens einer zweiten Spektralverteilung aussendet, um Licht mit unterschiedlichen Spektralanteilen, insbesondere weißes oder farbiges Licht, zu erzeugen.

5. Optische Prüfvorrichtung nach Anspruch 4,
**dadurch gekennzeichnet,**
**dass** die erste Spektralverteilung und die wenigstens zweite Spektralverteilung spektralseitig jeweils ein Maximum (M1, M2, ) aufweisen, die zueinander benachbart sind, um im jeweiligen Prüfzustand Licht unterschiedlicher Farbe, insbesondere in einem ersten Prüfzustand rotes Licht und/oder in einem zweiten Prüfzustand grünes Licht und/oder in einem dritten Prüfzustand blaues Licht und somit ein erstes Abbild (6a) und wenigstens ein zweites Abbild (6b) mit Grauwerten entsprechend den Kanälen einer RGB-Kamera zu erzeugen und/oder
**dass** die auflichtseitige Lichtquelle (4) einen Multispektralen-Beleuchtungsmodus umfasst, wobei im Multispektralen-Beleuchtungsmodus die auflichtseitige Lichtquelle (4) Licht mit mehr als 3 in Bezug auf das jeweilige Maximum (M1-7) benachbarten Spektralverteilungen umfasst oder
**dass** die auflichtseitige Lichtquelle (4) einen Hyperspektralen-Beleuchtungsmodus umfasst, wobei im Hyperspektralen -Beleuchtungsmodus die auflichtseitige Lichtquelle Licht mit mehr als 8, insbesondere 40, hinsichtlich des jeweiligen Maximums benachbarten Spektralverteilung umfasst.

6. Optische Prüfvorrichtung nach Anspruch 4 oder 5,
**dadurch gekennzeichnet,**
**dass** die Prüfvorrichtung (1) Analysemittel (8) umfasst, die mit den Steuermitteln (7) und der auflichtseitigen Lichtquelle (4) in Wirkverbindung stehen und so ausgebildet sind, dass
- in einem ersten Prüfzustand (200a) die auflichtseitige Lichtquelle (4) Licht der ersten Spektralverteilung aussendet und die Steuermittel (7) den Sollwert in Abhängigkeit des auflichtseitigen Grauwerts des Lichts der ersten Spektralverteilung vorgeben, um in einem ersten Abbild (6a) im Bereich des Hintergrunds (2) einen von der ersten Spektralverteilung abhängigen Grauwert zu erzeugen und
- in wenigstens einem zweiten Prüfzustand (200b) die auflichtseitige Lichtquelle (4) Licht der wenigstens zweiten Spektralverteilung aussendet und die Steuermittel (7) den Sollwert in Abhängigkeit des auflichtseitigen Grauwerts des Lichts der wenigstens zweiten Spektralverteilung vorgeben, um im wenigstens zweiten Abbild (6b) im Bereich des Hintergrunds (2) einen von der wenigstens zweiten Spektralverteilung abhängigen Grauwert zu erzeugen.

7. Optische Prüfvorrichtung nach einem der vorgenannten Ansprüche,
**dadurch gekennzeichnet,**
**dass** die Prüfvorrichtung (1) einen zusätzlichen homogenen Prüfzustand (21) umfasst, wobei in dem homogenen Prüfzustand (21) die hintergrundseitige Spektralverteilung, insbesondere die erste oder eine der wenigstens zweiten Spektralverteilungen, der auflichtseitigen Spektralverteilung entspricht.

8. Optische Prüfvorrichtung nach einem der vorgenannten Ansprüche,
**dadurch gekennzeichnet,**
**dass** die hintergrundseitige Lichtquelle (3) so ausgebildet ist, dass in einem Pulsdauerbetriebmodus zwischen einerseits einem Licht aussenden Betrieb während einer Einschaltdauer und andererseits einem kein Licht aussenden Betrieb während einer Ausschaltdauer periodisch umgeschaltet wird, um die Strahlungsleistung einzustellen oder
**dass** die hintergrundseitige Lichtquelle (3) so ausgebildet ist, dass in einem Stromregelungsmodus die Strombeaufschlagung der Lichtquelle (3) veränderbar ist, um die Strahlungsleistung einzustellen.

9. Optische Prüfvorrichtung nach einem der vorgenannten Ansprüche,
**dadurch gekennzeichnet,**
**dass** der Hintergrund (2) transluzent, insbesondere als Streuscheibe (2a), ausgebildet ist und sich in einem Bereich zwischen dem aufnehmbaren Prüfling (100) und der hintergrundseitigen Lichtquelle (3) erstreckt, derart, dass das Licht der hintergrundseitigen Lichtquelle (3) in Transmission gestreut wird oder
**dass** der Hintergrund (2) reflektierend, insbesondere als ein Flächenelement oder Metallblech (2b), ausgebildet ist und sich in einem Bereich erstreckt, der in Bezug auf die Blickrichtung der Kamera (5) hinter dem aufnehmbaren Prüfling (100) und der hintergrundseitige Lichtquelle (3) liegt, derart, dass das Licht der hintergrundseitigen Lichtquelle (3) reflektiert wird.

10. Verfahren zum Analysieren eines Prüflings (100), der in einem Erfassungsbereich einer monochromen Kamera (5) vor einem Hintergrund (2) anordenbar ist, insbesondere mittels der vorgenannten optischen Prüfvorrichtung (1), umfassend die folgenden Schritte.
- Anordnen des Prüflings (100) im Erfassungsbereich der monochromen Kamera (5) vor dem Hintergrund (2);
- Aussenden von Licht einer auflichtseitigen Spektralverteilung auf den Prüfling (100) mittels einer auflichtseitigen Lichtquelle (4);
- Ausleuchten des Hintergrunds (2) mit Licht einer hintergrundseitigen Spektralverteilung (3) mit einer veränderbaren Strahlungsleistung mittels einer hintergrundseitigen Lichtquelle (3), wobei die Strahlungsleistung der hintergrundseitigen Lichtquelle (3) gemäß einer Sollwertvorgabe mittels Steuermitteln (7) beeinflusst wird und sich die hintergrundseitige Spektralverteilung von der auflichtseitigen Spektralverteilung zum Erzielen wenigstens eines inhomogenen Prüfzustands (20) unterscheidet, wobei die Steuermittel (7), die zum Zusammenwirken mit der hintergrundseitigen Lichtquelle (3) ausgebildet sind, einen Sollwert für die Strahlungsleistung der hintergrundseitige Lichtquelle (3) erzeugen, um die Strahlungsleistung beim Ausleuchten des Hintergrunds (2) zu verändern und somit im Abbild (6) im Bereich des Hintergrunds (2) die Ausprägung des Grauwerts beeinflusst wird;
- Ortsgenaues Erfassen des Lichts im Erfassungsbereich gemäß seiner Spektralverteilung und Abbilden des Lichts zu Grauwerten mittels einer zum Abbilden des Erfassungsbereichs positionierten monochromen Kamera (5).

11. Verfahren nach Anspruch 10,
**gekennzeichnet durch** die folgenden Verfahrensschritte:
- Wählen des Sollwerts in Abhängigkeit eines Farbanteils des Prüflings (100) mittels der Steuermittel (7), um im Abbild (6) im Bereich des Hintergrunds (2) einen vom Farbanteil des Prüflings (100) abhängigen Grauwert zu erzeugen oder
- Wählen des Sollwerts in Abhängigkeit des auflichtseitigen Grauwerts oder eines Mittelwerts des auflichtseitigen Grauwerts mittels der Steuermittel (7), um im Abbild (6) im Bereich des Hintergrunds (2) einen von der auflichtseitigen Spektralverteilung abhängigen Grauwert zu erzeugen.
